# FASCICULE DE BREVET EUROPEEN

(11) **EP 3 046 877 B1**
(45) Date de publication et mention de la délivrance du brevet: **06.02.2019**
(21) Numéro de dépôt: 14766700.0
(22) Date de dépôt: 15.09.2014
(51) Int. Cl.: C01F 5/24, C01F 11/18, C04B 28/02, C04B 14/26, C04B 111/28, E04B 1/74

(54) **COMPOSITION MINERALE A BASE D'UNE PHASE SOLIDE MIXTE DE CARBONATES DE CALCIUM ET DE MAGNESIUM ET PROCEDE DE PREPARATION D'UNE TELLE COMPOSITION**
MINERALZUSAMMENSETZUNG AUF BASIS EINER GEMISCHTEN FESTEN PHASE VON CALCIUM- UND MAGNESIUMCARBONATEN SOWIE VERFAHREN ZUR HERSTELLUNG SOLCH EINER ZUSAMMENSETZUNG
MINERAL COMPOSITION BASED ON A MIXED SOLID PHASE OF CALCIUM AND MAGNESIUM CARBONATES AND PROCESS FOR PREPARING SUCH A COMPOSITION

(30) Priorité: 19.09.2013 BE 201300617
(43) Date de publication de la demande: 27.07.2016
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); PELLETIER, Marc, F-94160 Saint-Mandé (FR); GÄRTNER, Robert Sebastian, B-1501 Buizingen (BE); CHOPIN, Thierry, B-1180 Uccle (BE)
(74) Mandataire: Gevers Patents
(86) Numéro de dépôt international: PCT/EP2014/069625
(87) Numéro de publication internationale: WO 2015/039994

(56) Documents cités:
- EP-A1- 0 526 121
- WO-A1-2013/139957
- DE-A1- 3 245 103
- GB-A- 506 134
- US-A1- 2010 239 467

## Description

La présente invention se rapporte à une composition minérale à base d'une phase solide mixte de carbonates de calcium et de magnésium, à un procédé de préparation d'une telle composition et à son utilisation.

Les carbonates de calcium de synthèse sont connus, principalement pour des utilisations en tant que fillers (papier, peinture, plastiques...). Pour ces applications, il est connu notamment de synthétiser des carbonates denses, en particulier de la calcite qui est de morphologie scalénohédrale, rhombohédrale ou prismatique ou de l'aragonite de morphologie aciculaire.

On connaît aussi des compositions à base de carbonates de calcium et de magnésium de synthèse qui sont notamment utilisées dans le domaine de la fabrication des papiers et matières plastiques.

On peut citer par exemple des compositions selon les demandes de brevet EP-A-2322581 et DE-A-3245103. La première divulgue des particules de carbonates de magnésium plaquettaires sous la forme d'hydromagnésite en mélange avec du carbonate de calcium colloïdal, bien appropriées comme charges dans du papier ou des matières plastiques. La seconde divulgue des particules de carbonate de calcium scalénohédrales (soit en forme de grain de riz) en mélange avec des particules plaquettaires de carbonate basique de magnésium. Les carbonates respectifs ne forment pas un composite.

Les compositions décrites dans le brevet européen EP-B-0526121 sont formées d'un mélange uniforme de particules de carbonate de calcium ayant une structure cristalline d'aragonite aciculaire à configuration de particule en colonne et de carbonate de magnésium hydraté à configuration de particule plaquettaire. Ces compositions sont obtenues par carbonatation de solutions aqueuses d'hydroxydes de calcium et de magnésium, à l'aide d'un procédé complexe nécessitant l'utilisation d'un débit variable de CO₂.

On connaît aussi une demande de brevet japonaise JP 63-123810 qui décrit un procédé de production d'une composition minérale à base d'une phase solide mixte de carbonates de calcium et de magnésium. Ce procédé comprend une carbonatation d'une suspension aqueuse de carbonate basique de magnésium, à laquelle on ajoute en continu une suspension aqueuse d'hydroxyde de magnésium et d'hydroxyde de calcium. La carbonatation est effectuée avec un grand débit de CO₂, ce qui donne lieu à la formation de particules sphériques et poreuses de carbonate basique de magnésium sur les noyaux de germination de carbonate basique de magnésium initialement présents en suspension, les pores de ces particules étant partiellement remplis de carbonate de calcium. Cette composition est très dense et destinée à la production de charges dans le domaine de la fabrication du papier, de peintures, de matières plastiques ou encore dans le domaine médical.

La présente invention a pour but de développer des compositions minérales, notamment destinées à la construction. Dans ce domaine, il existe par exemple un besoin de développer des compositions minérales pouvant présenter une alternative intéressante aux mousses de polyuréthane ou phénoliques, habituellement utilisées par exemple dans les panneaux d'isolation thermique. Les matériaux minéraux présentent en effet l'avantage par rapport aux mousses organiques d'avoir une durée de vie plus longue, une tenue au feu nettement meilleure, ainsi qu'un impact environnemental réduit. Il est dès lors souhaitable que ces nouvelles compositions minérales possèdent des propriétés thermiques semblables à celles des mousses connues. Il y a donc lieu de développer des matériaux minéraux qui présentent une porosité volumique élevée et contrôlée, avec une masse volumique peu élevée, tout en conservant des propriétés mécaniques acceptables (résistance à la flexion, à la compression, aux chocs...).

Dans un milieu poreux, on entend par conductivité thermique une valeur λ qui vaut la somme de i) la conductivité thermique du gaz occlus dans les pores, rapportée à la fraction volumique des pores dans la composition et de ii) la conductivité thermique de la matière solide, rapportée à la fraction volumique de cette matière solide dans la composition. La conductivité thermique des gaz est généralement de l'ordre de 10⁻² W/K/m et celle des solides de l'ordre de 1 à 10² W/K/m; plus la fraction volumique de gaz (donc de pores) dans la composition est grande, plus la conductivité thermique de la composition sera faible et plus le matériau sera isolant.

On a déjà prévu un procédé de préparation d'une composition minérale à base d'une phase solide mixte de carbonates de calcium et de magnésium, au départ d'une dolomie crue qui est calcinée puis au moins partiellement hydratée (demande de brevet internationale WO2013139957).

Pour résoudre le problème exposé précédemment, il est prévu suivant l'invention un procédé de préparation d'une composition minérale à base d'une phase solide mixte de carbonates de calcium et de magnésium, comprenant
- i) une préparation, dans une phase aqueuse, d'une phase solide contenant au moins un composé calcique choisi parmi de l'hydroxyde de calcium (Ca(OH)₂), du carbonate de calcium et leurs mélanges et au moins un composé magnésien choisi parmi de l'oxyde de magnésium (MgO), de l'hydroxyde de magnésium (Mg(OH)₂), de la dolomie au moins partiellement hydratée et leurs mélanges, le poids de ladite phase solide étant compris entre 5 et 15 % du poids total de la suspension, à l'exclusion d'une mise en suspension uniquement de dolomie, hydratée ou non,
- ii) une carbonatation en une seule étape de ladite phase solide en suspension par injection d'un gaz contenant du CO₂ dans ladite suspension chauffée à une température de 55 à 90°C à un débit de CO₂ de 2,5 à 15 dm³/min/kg de ladite phase solide de la suspension, avec une diminution du pH de la suspension jusqu'à une valeur inférieure à 9 et avec une stabilisation de la conductivité électrique de la suspension, la carbonatation étant stoppée dès que cette stabilisation de conductivité électrique est observée, et
- iii) une obtention d'une phase solide mixte de carbonates de calcium et de magnésium de synthèse formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous la forme d'agglomérats, ladite partie calcique comprenant au moins un carbonate choisi parmi le groupe constitué de la calcite et de mélanges de calcite et d'aragonite, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2, et un rapport molaire Ca/Mg supérieur à 1,2 et égal ou inférieur à 4,0.

Le procédé selon l'invention présente l'avantage d'être simple à mettre en oeuvre et permet d'effectuer la carbonatation en une seule étape.

Au sens de la présente invention, on entend par stabilisation de la conductivité électrique une période de plus de 15 minutes au cours de laquelle la conductivité électrique mesurée dans la suspension ne varie pas de plus de 0,5 mS/cm vers le haut ou vers le bas, de préférence une période de 30 minutes au cours de laquelle la conductivité électrique mesurée dans la suspension ne varie pas de plus de 0,5 mS/cm vers le haut ou vers le bas, et avantageusement une période de 30 minutes au cours de laquelle la conductivité électrique mesurée dans la suspension ne varie pas de plus de 0,3 mS/cm vers le haut ou vers le bas. Selon les conditions opératoires, cette phase de stabilisation peut être plus ou moins longue. Dans certaines variantes du procédé, elle peut durer jusqu'à 60 minutes, voire plus.

Dans le cas où ledit au moins un composé calcique se trouve sous la forme de carbonate de calcium, celui-ci peut avantageusement être un calcaire de type filler (d₉₈ < 150 µm, de préférence d₉₈ < 50 µm), un calcaire broyé finement (GCC (Ground Calcium Carbonate), par exemple présentant un d₉₈ < 50 µm, de préférence un d₉₈ < 20 µm), un carbonate de calcium synthétique (PCC (Precipitated Calcium Carbonate)) ou encore un résidu provenant d'une calcination incomplète de calcaire.

Dans le cas où ledit au moins un composé calcique se trouve sous la forme d'hydroxyde de calcium, cet hydroxyde est obtenu par hydratation (extinction) d'oxyde de calcium. Suivant une forme de réalisation de l'invention, cette hydratation est obtenue par ladite phase aqueuse, lors de ladite préparation d'une suspension. Suivant un autre mode de réalisation de l'invention, le procédé comprend, avant ladite préparation d'une suspension, une hydratation préliminaire au moins partielle d'oxyde de calcium (CaO) en ledit hydroxyde de calcium. Cette hydratation préliminaire peut être effectuée par voie sèche ou quasi sèche. Elle peut aussi être effectuée par voie humide de façon à produire une suspension, notamment un lait de chaux, qui est ensuite éventuellement tamisée, broyée et/ou diluée pour ladite préparation de la suspension.

Cette hydratation préliminaire est avantageusement réalisée avec de l'eau, de l'eau contenant au moins un additif ou de l'eau contenant déjà au moins une partie dudit au moins un composé magnésien faisant partie de ladite phase solide en suspension.

L'oxyde de calcium CaO utilisé pour cette hydratation peut être une chaux vive, par exemple issue d'une calcination d'un calcaire, cette calcination pouvant avoir été éventuellement incomplète, la chaux contenant alors une fraction de carbonate de calcium.

Dans le cas où ledit au moins un composé magnésien se trouve sous la forme d'oxyde de magnésium, cet oxyde de magnésium peut être obtenu par des méthodes classiques de synthèse de MgO ou issu de la calcination d'un minerai magnésien (dolomite ou magnésite par exemple).

Dans le cas où ledit au moins un composé magnésien se trouve sous la forme d'hydroxyde de magnésium, celui-ci peut être obtenu par des méthodes classiques de synthèse de Mg(OH)₂ ou avantageusement par hydratation au moins partielle de MgO. Une dolomie au moins partiellement hydratée est de formule générale aCa(OH)₂.xMg(OH)₂.yMgO dans laquelle a, x et y sont des coefficients molaires avec notamment 0,8 ≤ a/(x+y) ≤ 1,2. Cette dolomie peut être obtenue par hydratation au moins partielle de dolomie vive.

Suivant un mode de préparation de l'invention, cette hydratation au moins partielle du composé magnésien est réalisée, lors de ladite préparation d'une suspension, par ladite phase aqueuse.

Suivant un autre mode de réalisation de l'invention, le procédé comprend, avant ladite préparation d'une suspension, une hydratation préalable au moins partielle du composé magnésien, notamment d'oxyde de magnésium (MgO), en ledit hydroxyde de magnésium. Cette hydratation préalable peut être effectuée par voie sèche ou quasi sèche. Ladite hydratation préalable peut aussi être effectuée par voie humide de façon à produire un lait de magnésie qui est ensuite éventuellement tamisé, broyé et/ou dilué pour ladite préparation de la suspension.

Ladite hydratation préalable est avantageusement réalisée avec de l'eau, de l'eau contenant au moins un additif ou de l'eau contenant déjà au moins une partie dudit au moins un composé calcique faisant partie de ladite phase solide en suspension.

La phase solide de la suspension présente un rapport molaire Ca/Mg inférieur ou égal à 4,0. Ce rapport molaire est supérieur à 1,2. Il peut aussi en particulier être inférieur ou égal à 3,0, plus particulièrement inférieur ou égal à 2,5.

Il faut noter que, dans le procédé suivant l'invention, il n'est pas prévu de mettre en suspension uniquement de la dolomie hydratée ou non.

De préférence, ledit au moins un composé magnésien formant une partie de la phase solide de la suspension est choisi parmi de l'oxyde de magnésium, de l'hydroxyde de magnésium et leurs mélanges. Dans ce cas la suspension préparée présente une phase solide qui ne contient pas de dolomie hydratée ou non.

On peut aussi prévoir que ledit au moins un composé magnésien soit de la dolomie au moins partiellement hydratée, éventuellement en mélange avec de l'oxyde de magnésium, de l'hydroxyde de magnésium ou leur mélange, mais de façon à obtenir un rapport molaire Ca/Mg supérieur à 1,2 et inférieur ou égal à 4,0, en particulier inférieur ou égal à 3,0, éventuellement inférieur ou égal à 2,5, dans ladite phase solide de la suspension.

Les carbonates de calcium ont habituellement une surface spécifique plus faible que celle de l'hydromagnésite et une masse volumique en vrac plus élevée. Par conséquent, au-delà d'un certain rapport Ca/Mg, en particulier au-delà de Ca/Mg = 4,0, la proportion de carbonate de calcium dans le produit obtenu par le procédé de la présente invention devient trop importante pour permettre l'obtention de surfaces spécifiques supérieures à 10 m²/g et de masses volumiques en vrac inférieures à 250 kg/m³.

La carbonatation de la phase solide en suspension est avantageusement effectuée à une température comprise entre 60 et 80°C, de préférence inférieure ou égale à 70°C, en particulier inférieure ou égale à 65 °C. Une carbonatation à une température plus basse, notamment à une température inférieure à 55°C, en particulier inférieure à 50°C, favorise généralement la formation d'un carbonate de magnésium sous forme de nesquéhonite plutôt que sous forme d'hydromagnésite. Par conséquent, la phase solide mixte de carbonates de ladite composition minérale ainsi formée présente généralement une masse volumique en vrac trop élevée, notamment supérieure à 250 kg/dm³, voire supérieure à 300 kg/dm³, ainsi qu'une conductivité thermique également trop élevée.

Lors de cette étape de carbonatation, on prévoit de préférence que le CO₂ soit injecté pur à 100 % en volume ou dilué dans un gaz porteur, en particulier de l'air, à une concentration volumique de CO₂ dans le gaz porteur de 10 à 50 %, en particulier de 15 à 25 %. Le débit total d'injection (gaz porteur et CO₂) peut avantageusement être de l'ordre de 15 à 55 dm³/min/kg de phase solide en suspension. Le débit de CO₂ (gaz porteur exclu) est avantageusement compris entre 2,5 et 9,5 dm³/min/kg, en particulier entre 5 et 9,5 dm³/min/kg de phase solide en suspension.

Au cours de la carbonatation (étape ii du procédé selon la présente invention), l'évolution de la conductivité électrique de la suspension dépend du choix de la phase solide dans la suspension.

Dans le cas où ledit composé calcique se trouve sous la forme d'hydroxyde de calcium ou contient de l'hydroxyde de calcium, la conductivité électrique commence par diminuer rapidement et abruptement traduisant la précipitation de carbonate de calcium. En revanche, lorsque ledit au moins un composé calcique se trouve exclusivement sous la forme de carbonate de calcium, il ne subit aucune réaction au cours de la carbonatation et n'influence donc pas la conductivité électrique de la suspension.

La carbonatation du composé magnésien s'accompagne d'une augmentation de la conductivité électrique de la suspension du fait, dans un premier temps, de la formation d'ions bicarbonate de magnésium. En parallèle à cette dissolution a lieu la précipitation des ions bicarbonate en hydromagnésite ce qui conduit, dans un second temps, soit à une diminution de la conductivité électrique, soit au moins à sa stabilisation. Cette augmentation suivie d'une diminution ou stabilisation liée à la carbonatation du composé magnésien intervient dès le début de l'étape de carbonatation lorsque le composé calcique se trouve sous forme de carbonate de calcium, soit après la précipitation du carbonate de calcium lorsque ledit composé calcique se trouve initialement sous la forme d'hydroxyde de calcium.

Dans tous les cas, le pH de la suspension (initialement proche de 9 lorsque le composé calcique se trouve sous la forme de carbonate de calcium et compris entre 12 et 13 lorsque le composé calcique est sous forme d'hydroxyde de calcium) diminue au cours de la réaction de carbonatation de la phase solide en suspension pour atteindre des valeurs inférieures à 9, en particulier inférieures à 8,5 et plus particulièrement inférieures à 8,3. Même si ce pH est atteint, la réaction n'est toutefois stoppée que lorsque l'étape de stabilisation prédécrite de la conductivité électrique est observée.

Pendant la mise en suspension et la carbonatation, la suspension peut avantageusement être maintenue sous agitation, par exemple à une vitesse de 350 à 650 rpm.

Suivant une forme de réalisation de l'invention, le procédé comprend en outre, après carbonatation, une étape de séparation solide-liquide entre ladite phase solide mixte, carbonatée, et ladite phase aqueuse de ladite suspension. Avantageusement la phase solide mixte peut alors être au moins partiellement séchée.

La présente invention est également relative à une composition minérale à base d'une phase solide mixte de carbonates de calcium et de magnésium de synthèse, qui peut être préparée selon le procédé suivant l'invention. Cette composition est formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous forme d'agglomérats, ladite partie calcique comprenant au moins un carbonate choisi parmi le groupe constitué de calcite, et de mélanges de calcite et d'aragonite, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égal à 80 kg/m³, mesurée selon la norme EN 459.2, et un rapport molaire Ca/Mg supérieur à 1,2 et égal ou inférieur à 4,0. Avantageusement le rapport molaire Ca/Mg peut être inférieur ou égal à 3, en particulier à 2,5.

Préférentiellement, la partie calcique de ladite composition minérale contient moins de 30% en poids, de préférence moins de 20% en poids, en particulier moins de 10% en poids, voire moins de 5% en poids d'aragonite.

De manière avantageuse, la partie calcique de ladite composition minérale est essentiellement constituée de calcite.

La composition selon la présente invention peut comprendre en outre une phase aqueuse, ladite composition étant alors sous forme de suspension ou de pâte. Elle peut aussi être sous forme solide, en particulier pulvérulente, et présenter un taux d'humidité compris entre 0 et 4 %, en particulier entre 0,1 et 4 %, de préférence inférieur ou égal à 3 %, plus particulièrement inférieur ou égal à 2 % en poids d'eau par rapport au poids total de la composition.

Suivant un mode de réalisation de l'invention, ladite phase solide mixte est broyée pour obtenir des particules de taille inférieure ou égale à 2 mm.

La calcite et l'aragonite sont deux structures cristallines de carbonate de calcium CaCO_{3.} L'hydromagnésite, appelée aussi carbonate basique de magnésium, est de formule Mg₅(CO₃)₄(OH)₂.4H₂O ou 4MgCO₃.Mg(OH)₂.4H2O. Dans les bases de données de diffraction des rayons X (International Centre for Diffraction Data (ICDD) database), l'hydromagnésite correspond aux fiches portant les références 00-025-0513 (monoclinique) et 01-070-1177 (orthorhombique). Elle n'a pas à être confondue avec la magnésite, carbonate de magnésium de formule MgCO₃, ou avec la nesquéhonite, un carbonate de magnésium hydraté de formule MgCO₃.3H₂O, qui sont à éviter suivant l'invention.

Par l'expression "masse volumique en vrac", on entend, suivant l'invention, le rapport entre la masse du matériau et le volume apparent de l'ensemble des agglomérats ou grains, mesurée selon la norme EN 459.2.

La faible masse volumique en vrac de la composition obtenue suivant l'invention résulte d'un large volume poreux, c'est-à-dire d'une incorporation élevée de gaz dans la phase solide mixte qui présente plusieurs niveaux de porosité : au sein des agrégats de cristaux, au sein des agglomérats d'agrégats et même entre les agglomérats ou grains.

Par l'expression "volume poreux", on entend dans la présente invention un volume poreux global correspondant aux différentes porosités décrites ci-dessus et mesuré par la méthode d'intrusion au mercure.

Il est généralement admis que la masse volumique en vrac d'une hydromagnésite standard est comprise entre 200 et 400 kg/m³. Les carbonates de calcium de synthèse ont quant à eux une masse volumique en vrac comprise habituellement entre 250 et 600 kg/m³.

Contre toute attente la composition selon l'invention, à base d'une phase solide mixte de carbonate de calcium et d'hydromagnésite, présente une masse volumique en vrac inférieure à 250 kg/m³ pour un rapport molaire Ca/Mg compris entre > 1,2 et 4.

Ce résultat est d'autant plus surprenant qu'il permet d'atteindre des valeurs de conductivité thermique réduites de la composition minérale suivant l'invention, de l'ordre de 25 à 45 mW/K/m, en particulier de l'ordre de 35 à 40 mW/K/m.

La phase solide mixte de la composition selon l'invention présente donc des particularités qui ne se retrouvent pas dans les phases pures habituelles de type hydromagnésite ou carbonate de calcium de synthèse.

L'explication résiderait dans le fait que la phase solide mixte de calcium et de magnésium présente une structure de cristallisation mixte qui permet le meilleur compromis entre porosité, degré d'agrégation et organisation des cristaux les uns par rapport aux autres. Ce compromis résulte en une faible masse volumique en vrac et ainsi en une faible conductivité thermique. Cet effet peut être obtenu par le procédé selon l'invention qui est particulièrement aménagé pour atteindre les caractéristiques particulières de faible masse volumique en vrac et donc de faible conductivité thermique de la phase solide de la composition suivant l'invention.

La phase solide mixte de la composition minérale suivant l'invention peut présenter une surface spécifique supérieure ou égale à 10 m²/g, plus particulièrement supérieure à 12 m²/g et de préférence supérieure ou égale à 15 m²/g, et pouvant aller jusqu'à 25 m²/g.

Par l'expression « surface spécifique » utilisée dans la présente invention, on entend la surface spécifique mesurée par manométrie d'adsorption d'azote et calculée selon le modèle de Brunauer, Emmett et Teller (méthode BET).

La phase solide mixte de la composition selon l'invention présente donc un autre avantage inattendu en ce que sa surface spécifique est supérieure à celle des carbonates de calcium broyés (GCC) ou de synthèse habituels, qui présentent une surface spécifique de l'ordre de 3 à 15 m²/g, le plus souvent inférieure à 10 m²/g.

Dans la composition suivant l'invention, l'hydromagnésite est présente à une teneur comprise entre 5 et 80% en poids, avantageusement entre 5 et 71 % en poids, de préférence entre 15 et 50 % en poids, plus particulièrement entre 25 et 35 % en poids, par rapport au poids de ladite phase solide mixte.

Avantageusement, ladite partie calcique est présente dans la composition suivant l'invention en une quantité allant de 20 à 85 %, avantageusement de 29 à 85 %, de préférence de 50 à 75 % en poids, en particulier de 60 à 70% en poids par rapport au poids total de la phase solide mixte. Le total de la partie magnésienne représente une quantité allant de 5 à 71%, avantageusement de 15 à 50 %, de préférence de 20 à 40 % et de manière plus préférentielle de 25 % à 35 % du poids total de la phase solide mixte.

Dans une poudre sèche d'une composition préférentielle suivant l'invention on peut distinguer les composants suivants (en % massiques) :
- carbonate de calcium CaCO₃ (calcite et éventuellement traces d'aragonite) : 29 - 85 %
- portlandite Ca(OH)₂: 0 - 2 %
- hydromagnésite Mg₅(CO₃)₄(OH)₂.4H₂O : 5 - 71 %
- brucite Mg(OH)₂: 0 - 10 %, de préférence de 0 - 7 %, en particulier 0-3%
- périclase MgO : 0 - 2 %
- oxyhydroxyde de magnésium Mg₃O₂(OH)₂ : 0 - 5 %, de préférence 0 - 2 %.

Préférentiellement, dans la composition minérale suivant l'invention, la masse volumique en vrac de la phase solide mixte est inférieure ou égale à 220 kg/m³, plus particulièrement inférieure ou égale à 200 kg/m³, voire inférieure ou égale à 180 kg/m³.

Dans une composition avantageuse selon la présente invention, la phase solide mixte de la composition minérale présente une conductivité thermique comprise entre 25 et 45 mW/K/m, en particulier entre 28 et 40 mW/K/m.

Suivant une forme de réalisation avantageuse de l'invention, la phase solide mixte est présente en une proportion comprise dans la plage allant de 5 à 65 % en poids par rapport au poids total de la composition et un milieu liquide est présent en une proportion comprise dans la plage allant de 35 à 95 % en poids par rapport au poids total de la composition minérale.

Suivant une forme de réalisation particulière de l'invention, ladite phase solide mixte est composée d'agglomérats broyés en grains de taille inférieure ou égale à 2 mm, de préférence inférieure ou égale à 1 mm, de manière plus préférentielle inférieure ou égale à 200 µm et en particulier inférieure ou égale à 80 µm. Avantageusement, ces agglomérats présentent un d₅₀ supérieur à 5 pm, avantageusement supérieur à 7 µm et un d₉₅ supérieur à 10 pm, avantageusement supérieur à 20 µm.

Suivant l'invention, les agrégats de la phase solide mixte sont constitués d'un coeur calcique sur lequel sont agrégées des plaquettes d'hydromagnésite.

Les agrégats peuvent présenter une morphologie sensiblement sphérique.

Les agrégats peuvent avoir pour 80 % en volume une taille moyenne de l'ordre de 1 à 30 pm, de préférence de 3 à 20 µm et en particulier de 5 à 15 µm. Les plaquettes d'hydromagnésite ont notamment pour 80 % en volume une largeur de plaquette de l'ordre de 0,5 à 10 µm, de préférence de 0,5 à 5 µm.

Les plaquettes d'hydromagnésite ne sont pas agrégées au hasard. Les agrégats suivant l'invention présentent une forme générale analogue à celle d'une rose des sables.

Une poudre sèche d'une composition minérale préférentielle suivant l'invention pourra présenter les caractéristiques suivantes :
- masse volumique en vrac : 100 - 250 kg/m³
- conductivité thermique : 25 - 45 mW/K/m
- surface spécifique BET : 10 - 35 m²/g
- volume des pores < à 100 µm : 1 - 5 cm³/g
- humidité : 0 - 4 %.

La composition selon l'invention peut comprendre en outre des additifs facilitant la préparation, la filtration, le stockage et/ou le broyage (la désagglomération) de la dite composition, en particulier afin d'améliorer la stabilité des suspensions selon l'invention.

Avantageusement, la phase solide mixte peut être broyée ou désagglomérée pour obtenir des particules de taille inférieure ou égale à 2 mm, de préférence inférieure ou égale à 1 mm, de manière plus préférentielle inférieure ou égale à 200 µm et en particulier inférieure ou égale à 80 µm. L'opération de séchage peut être effectuée simultanément à celle de désagglomération ou de broyage.

La présente invention concerne également une utilisation d'une composition minérale suivant l'invention, ou d'une composition obtenue selon le procédé suivant l'invention dans des matériaux de construction.

On peut envisager en particulier cette composition comme matière première pour la préparation de matériaux d'isolation thermique, en particulier de panneaux d'isolation thermique, sous la forme de plaques ou de mousses minérales, ou dans des mortiers, enduits, bétons notamment, comme composant isolant thermique.

On peut aussi envisager une utilisation de la composition suivant l'invention, comme charge (filler) dans des matières polymères, des caoutchoucs, des papiers, des peintures, des produits cosmétiques, en particulier comme charges minérales de faible densité et/ou de porosité élevée. On peut prévoir cette composition comme agent viscosifiant ou rhéologique par exemple dans des suspensions minérales, des colles, des bitumes et des asphaltes. On peut envisager son utilisation dans le traitement des eaux ou des gaz ou dans le domaine de la catalyse ou encore comme support de parfums, arômes, principes actifs, afin d'en assurer un relargage progressif et/ou retardé dans leur milieu d'utilisation.

D'autres détails et particularités de l'invention ressortiront de la description donnée ci-après à titre d'exemples non limitatifs, dans lesquels les pourcentages donnés sont massiques, lorsqu'ils ne sont pas précisés.

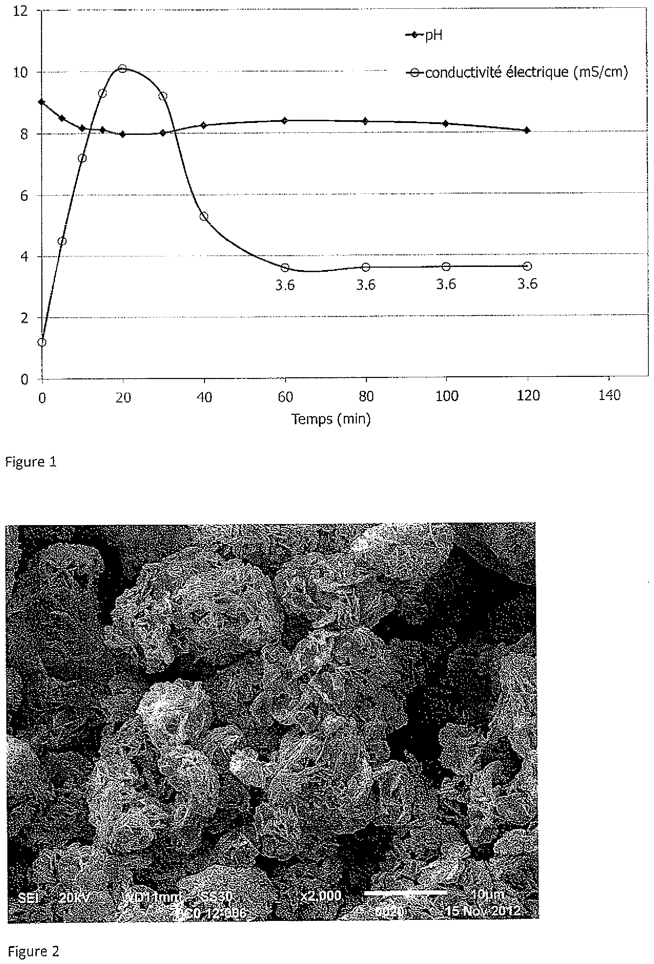

Les figures 1, 5, 8 et 10 annexées représentent les courbes d'évolution du pH et de la conductivité électrique au cours de la réaction de carbonatation des exemples 1, 4, 6 et 7. Les figures 2, 3, 4A, 4B, 6, 7, 9 et 11 illustrent par des clichés de microscopie électronique à balayage (MEB) la structure cristalline des compositions obtenues dans les exemples 1 à 7.

Dans les exemples, la masse volumique en vrac est mesurée d'après la norme EN 459.2. Lors de la mesure de la conductivité thermique, qui dépend du degré de tassement de l'échantillon, apparaît une seconde valeur de masse volumique non normalisée qu'il est impératif de mentionner afin de connaître les conditions de la mesure de conductivité thermique.

La conductivité thermique est mesurée sur un matériau en vrac en suivant les enseignements des normes ISO 8301 ou NF EN 12664. Plus précisément, la conductivité thermique telle que mentionnée dans la présente invention est mesurée sur la phase solide mixte de la composition minérale obtenue selon la présente invention, c'est-à-dire sur une poudre préalablement séchée à 105°C et dont la teneur en humidité est inférieure à 4 % en poids. Dans le cas où la composition selon l'invention se trouve sous la forme d'une suspension ou d'une pâte, ladite poudre est obtenue par filtration, séchage et broyage à partir de cette composition.

La mesure est réalisée dans un appareil à fluxmètre (Netzsch Heat Flow Meter HFM 463/3/IE Lambda Series) sur une poudre en vrac placée dans un moule dont la taille est supérieure à la taille du fluxmètre. La préparation du lit de poudre dans le moule est telle que la surface du lit de poudre est la plus plate possible et que la masse volumique du lit de poudre sur lequel sera effectuée la mesure de conductivité thermique est égale à la masse volumique en vrac mesurée au préalable sur chaque poudre selon la méthode décrite dans la norme EN 459.2 à 20 % près, si possible à 15 % près. Une seule mesure est effectuée à 20°C avec un écart de température de 20°C entre les deux faces de l'échantillon (soit 10°C pour une face et 30°C pour l'autre).

La surface spécifique est mesurée selon la méthode BET basée sur une mesure de manométrie d'adsorption d'azote et le volume des pores < à 100 µm est mesuré par intrusion de mercure.

### Exemple comparatif

### 1 : carbonatation à 70 °C d'une suspension d'hydroxyde de magnésium et de calcaire broyé avec Ca/Mg (mol) de l'ordre de 0,5

### A/ Les matières premières

Le calcaire broyé et l'hydroxyde de magnésium sont des produits industriels. D'après une analyse chimique par spectrométrie de fluorescence X complétée par une analyse de thermogravimétrie, l'hydroxyde de magnésium contient 95,0 ± 0,5 % de Mg(OH)₂, < 1,0 % de MgO et 2,5 ± 0,5 % de CaCO₃, et des impuretés, principalement SiO₂, Al₂O₃ et Fe₂O₃. Il se présente sous la forme d'une suspension contenant 53 % de solide et le reste d'eau. Le calcaire broyé contient > 95 % de CaCO₃ ainsi que des impuretés, principalement à nouveau SiO₂, Al₂O₃, Fe₂O₃. Ce calcaire est un calcaire naturel qui a simplement été broyé industriellement. Il présente, d'après une mesure de la distribution en taille de ses particules par granulométrie laser, un d₉₈ de l'ordre de 12 µm (± 2 µm).

### B/ Préparation de la suspension

4,9 kg du calcaire broyé et 5,8 kg d'hydroxyde de magnésium (équivalent sec) sont mis en suspension dans environ 80 dm³ d'eau (eau apportée par la suspension de Mg(OH)₂ complétée par de l'eau de ville) pour obtenir une suspension mixte. Les masses de calcaire broyé et d'hydroxyde de magnésium ont été déterminées de manière à avoir un rapport molaire Ca/Mg de l'ordre de 0,5. L'extrait sec (teneur en solide) de cette suspension est de 10,7 % en poids. Cette suspension est alors introduite dans un réacteur d'une capacité de 100 dm³, équipé d'une double enveloppe et muni d'un système d'agitation et d'un système de chauffage. Ce réacteur est aussi équipé d'une sonde de pH, d'une sonde de conductivité électrique et d'une sonde de température. La suspension est maintenue sous agitation et sa température est portée à 70 °C ± 2 °C.

### C/ Carbonatation

Lorsque la suspension a atteint la température de 70 °C ± 2 °C, l'injection de CO₂ sous la forme d'un gaz composé de 15 % en volume de CO₂ et de 85 % en volume d'air est démarrée. Le gaz porteur de CO₂ est injecté par une buse qui se trouve dans le bas du réacteur. Les débits de gaz dans la suspension correspondent à 55 dm³/min de CO₂ et 314 dm³/min d'air, soit 5,1 dm³/min de CO₂ et 29,3 dm³/min d'air par kg de solide dans la suspension de départ (calcaire broyé et hydroxyde de magnésium). Pendant toute la carbonatation, la conductivité électrique de la suspension ainsi que son pH sont enregistrés. La suspension a un pH de 9,0 avant carbonatation. Au cours de celle-ci, la conversion de l'hydroxyde de magnésium en carbonate s'accompagne a) d'une diminution du pH et b) d'une augmentation jusqu'à un maximum, suivie d'une diminution puis d'une stabilisation de la conductivité électrique (Figure 1). La réaction est arrêtée après 1 heure de stabilisation de la conductivité électrique à 3,6 mS/cm. A la fin de cette carbonatation, le pH de la suspension n'est plus que de 8,0. L'augmentation de la conductivité électrique au début de la réaction de carbonatation indique une formation de bicarbonate de magnésium soluble. La diminution qui s'ensuit correspond à la précipitation de l'hydromagnésite.

### D/ Traitements post-synthèse

A l'issue de la carbonatation, la distribution en taille des particules en suspension est mesurée par granulométrie laser en plaçant quelques gouttes de la suspension dans du méthanol. Le d₅₀ de cette suspension est de 11,6 µm et son d₉₅ est de 26,3 µm. La suspension est ensuite filtrée sur büchner, placée dans une étuve à 105 °C pour un séchage de 48 heures, puis le solide séché est broyé afin d'obtenir une poudre de granulométrie inférieure à 2 mm et dont le taux d'humidité est inférieur à 3 %.

D'après une analyse par diffraction des rayons X complétée par une analyse thermogravimétrique, le produit ainsi obtenu contient 56 ± 2 % de CaCO₃ (calcite), 40 ± 2 % d'hydromagnésite, et 4 ± 1 % de brucite Mg(OH)₂. Sa masse volumique en vrac mesurée d'après la norme EN 459.2 est de 173 kg/m³. Sa surface spécifique est de 16,5 m²/g (méthode BET basée sur une mesure de manométrie d'adsorption d'azote après un dégazage de quelques heures à 190 °C). Sa conductivité thermique est de 37,2 mW/K/m pour une masse volumique au moment de la mesure de 185 kg/m³. La figure 2 est un cliché de microscopie électronique à balayage du produit ainsi obtenu. Cette photographie montre que l'hydromagnésite (plaquettaire) qui s'est formée par carbonatation de l'hydroxyde de magnésium a cristallisé à la surface des particules de calcaire broyé.

### Exemple comparatif

### 2 : carbonatation à 70 °C d'une suspension d'hydroxyde magnésium et de calcaire broyé avec Ca/Mg (mol) de l'ordre de 0,9.

Cet exemple est tout à fait similaire à l'exemple 1, seules les masses de calcaire broyé et d'hydroxyde de magnésium étant différentes.

Cette fois, 6,5 kg de calcaire broyé et 4,2 kg d'hydroxyde de magnésium (équivalent sec) sont mis en suspension dans environ 80 dm³ d'eau (eau apportée par la suspension de Mg(OH)₂ complétée par de l'eau de ville) pour obtenir une suspension mixte. Les masses de calcaire broyé et d'hydroxyde de magnésium ont été déterminées de manière à avoir cette fois-ci un rapport molaire Ca/Mg de l'ordre de 0,9. L'extrait sec (teneur en solide) de cette suspension est de 11,3 %.

Cette suspension est alors introduite dans le même réacteur que celui utilisé dans l'exemple 1 et la carbonatation est réalisée dans des conditions exactement similaires à celles de la carbonatation décrite dans l'exemple 1. Comme décrit dans l'exemple 1, la conductivité électrique de la suspension augmente dès le départ de la réaction de carbonatation, atteint un maximum avant de diminuer nettement et de se stabiliser. A nouveau, la réaction est arrêtée après stabilisation de la conductivité électrique de la suspension pendant 40 minutes à 4,0 mS/cm (± 0,1 mS/cm) A cet instant, le pH de la suspension, initialement de 9,1, est tombé à 8,1.

A l'issue de la carbonatation, la distribution en taille des particules en suspension est à nouveau mesurée et conduit à une valeur de d₅₀ de 12,4 µm et de d₉₅ de 30,1 µm. La suspension est ensuite filtrée, séchée puis le solide obtenu est broyé comme dans l'exemple 1.

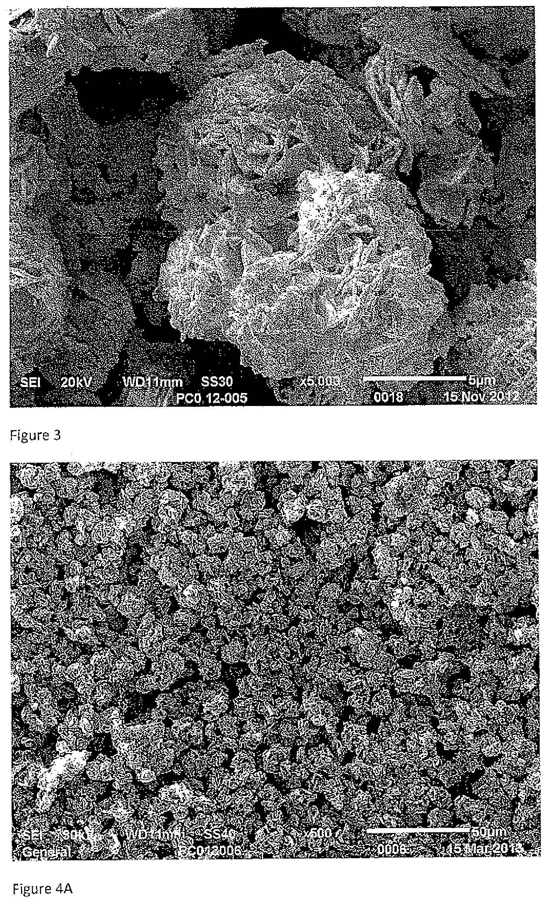

D'après une analyse par diffraction des rayons X complétée par une analyse thermogravimétrique, le produit ainsi obtenu contient 70 ± 2 % de CaCO₃ (calcite), 26 ± 2 % d'hydromagnésite, et 4 ± 1 % de brucite. Sa masse volumique en vrac mesurée d'après la norme EN 459.2 est de 211 kg/m³. Sa surface spécifique est de 12,3 m²/g. Sa conductivité thermique est de 38,1 mW/K/m pour une masse volumique au moment de la mesure de 225 kg/m³. La figure 3 illustre le produit ainsi obtenu. Cette photographie montre, comme la figure 2, que l'hydromagnésite qui s'est formée par carbonatation de l'hydroxyde de magnésium a cristallisé à la surface des particules de calcaire broyé.

### Exemple 3 : carbonatation à 70 °C d'une suspension d'hydroxyde magnésium et de calcaire broyé avec Ca/Mg (mol) de l'ordre de 1,6.

Cet exemple est tout à fait comparable aux exemples 1 et 2. Les masses de calcaire broyé et d'hydroxyde de magnésium sont à nouveau différentes et le calcaire broyé utilisé provient d'une autre source et présente cette fois un d₉₈ de l'ordre de 36 µm.

Cette fois, 7,9 kg de calcaire broyé et 2,8 kg d'hydroxyde de magnésium (équivalent sec) sont mis en suspension dans environ 80 dm³ d'eau (eau apportée par la suspension de Mg(OH)₂ complétée par de l'eau de ville) pour obtenir une suspension mixte. Les masses de calcaire broyé et d'hydroxyde de magnésium ont été déterminées de manière à avoir cette fois-ci un rapport molaire Ca/Mg de l'ordre de 1,6. L'extrait sec (teneur en solide) de cette suspension est de 12,5 %.

Cette suspension est alors introduite dans le même réacteur que celui utilisé dans les exemples précédents et la carbonatation est réalisée dans des conditions exactement similaires à celles de la carbonatation décrite dans les exemples 1 et 2. Comme précédemment, la conductivité électrique de la suspension augmente dès le départ de la réaction de carbonatation, atteint un maximum avant de diminuer nettement et de se stabiliser. La réaction est arrêtée lorsque la conductivité électrique est stable à 3,4 mS/cm (± 0,2 mS/cm) pendant 30 minutes. A cet instant le pH de la suspension, initialement à 9,4, est tombé à 8,3.

A l'issue de la carbonatation, la distribution en taille des particules en suspension est à nouveau mesurée et conduit à une valeur de d₅₀ de 9,3 µm et de d₉₅ de 22,7 µm. La suspension est ensuite filtrée, séchée puis le solide obtenu est broyé comme dans les exemples ci-dessus.

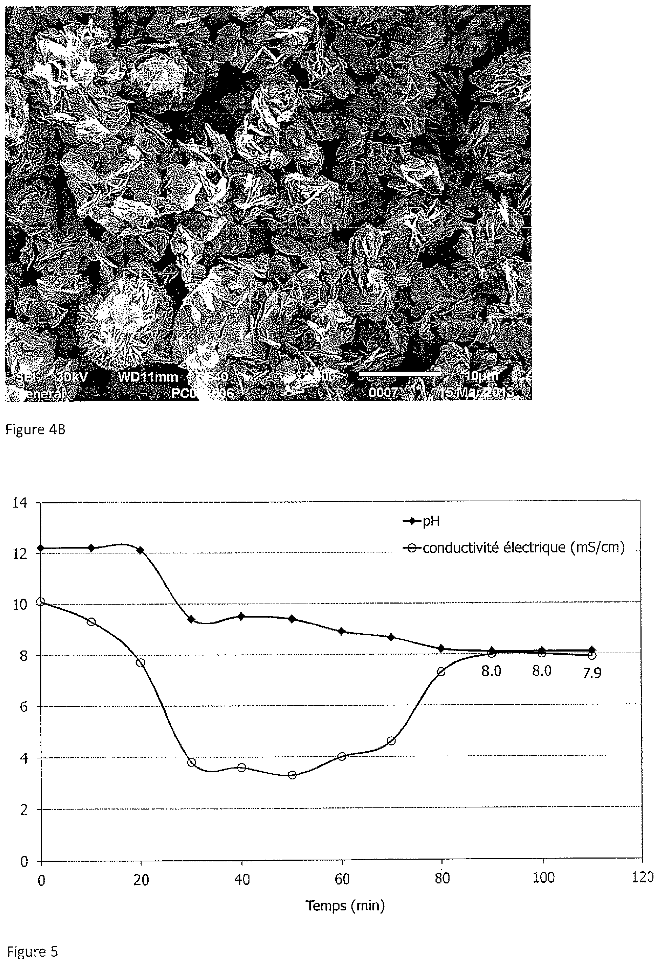

D'après une analyse par diffraction des rayons X complétée par une analyse thermogravimétrique, le produit ainsi obtenu contient 59 ± 2 % de CaCO₃ (calcite), 37 ± 2 % d'hydromagnésite, et environ 4 % ± 1 % de brucite Mg(OH)₂. Sa masse volumique en vrac mesurée d'après la norme EN 459.2 est de 214 kg/m³. Sa surface spécifique est de 11,5 m²/g (méthode BET basée sur une mesure de manométrie d'adsorption d'azote). Sa conductivité thermique est de 37,6 mW/K/m pour une masse volumique au moment de la mesure de 222 kg/m³. Les figures 4A et 4B illustrent le produit ainsi obtenu. Ces photographies montrent que le produit est homogène et que les plaquettes d'hydromagnésite recouvrent à nouveau les particules de calcaire broyé.

### Exemple 4 : carbonatation à 60 °C d'une suspension de dolomie et de calcaire broyé avec Ca/Mg (mol) de l'ordre de 1,5.

Cet exemple est inspiré des exemples précédents, mais cette fois le calcaire broyé est mis en suspension non pas avec une suspension de Mg(OH)₂, mais avec une suspension de dolomie au moins partiellement hydratée préparée au préalable.

Dans une première étape 5,8 kg d'une dolomie vive de granulométrie 0-3 mm, sont placés dans 23,0 kg d'eau chauffée à 55 °C. Cette suspension est placée sous agitation pendant 30 minutes, durée pendant laquelle la dolomie s'hydrate au moins partiellement. A l'issue des 30 minutes d'hydratation, 20,0 kg supplémentaires d'eau et 3,0 kg de calcaire broyé (GCC identique à celui de l'exemple 3) sont ajoutés et l'agitation est prolongée pendant 20 minutes. Les masses de dolomie et de calcaire broyées sont déterminées pour fixer le rapport Ca/Mg à 1,5. La suspension ainsi obtenue est alors tamisée à 200 µm afin d'enlever les particules les plus grossières (notamment les incuits contenus au départ dans la dolomie vive). La suspension tamisée est alors diluée jusqu'à un extrait sec (teneur en solide) de 9,4 % et 80 dm³ de cette suspension sont introduits dans le réacteur de 100 dm³ déjà utilisé dans tous les exemples précédents.

La carbonatation est cette fois réalisée à 60 °C. Le débit de CO₂ est de 45 dm³/min et celui d'air de 180 dm³/min, soit une concentration volumique de 20 % de CO₂ dans le gaz, soit également environ 6,0 dm³/min de CO₂ et 24,0 dm³/min d'air par kg de solide présent dans la suspension avant carbonatation.

Au cours de la carbonatation (Figure 5), la conductivité électrique de la suspension commence par diminuer et cette diminution est accompagnée d'une chute de pH de 12,2 à 9,4. Ces résultats sont la preuve de la carbonatation de la partie calcique de la dolomie au moins partiellement hydratée formant in situ un carbonate de calcium (PCC) qui vient s'ajouter au calcaire broyé de départ (GCC). Puis, après un certain ralentissement de la réaction, la conductivité électrique augmente à nouveau lentement avant de finalement se stabiliser pendant 20 minutes à 8,0 mS/cm (± 0,1 mS/cm). Cette deuxième phase de la réaction s'accompagne d'une deuxième diminution du pH jusqu'à 8,1 et traduit la compétition entre formation d'hydromagnésite et la dissolution de Mg(OH)₂ (et éventuellement de l'hydromagnésite déjà formée) en ions bicarbonate de Mg.

A l'issue de la carbonatation, la distribution en taille des particules en suspension est à nouveau mesurée et conduit à une valeur de d₅₀ de 8,8 µm. La suspension est ensuite filtrée, séchée puis le solide obtenu est broyé comme dans les exemples ci-dessus.

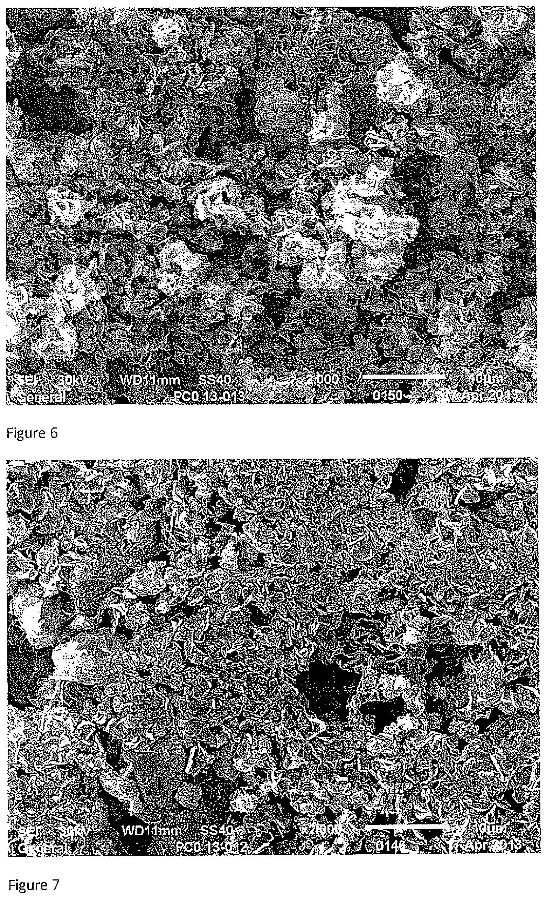

D'après une analyse par diffraction des rayons X complétée par une analyse thermogravimétrique, le produit ainsi obtenu contient 64 ± 2 % de CaCO₃ (calcite), 32 ± 2 % d'hydromagnésite, le reste étant composé de Mg(OH)₂ et Mg₃O₂(OH)₂. Sa masse volumique en vrac mesurée d'après la norme EN 459.2 est de 161 kg/m³. Sa surface spécifique est de 17,7 m²/g (méthode BET basée sur une mesure de manométrie d'adsorption d'azote). Sa conductivité thermique est de 36,4 mW/K/m pour une masse volumique au moment de la mesure de 177 kg/m³. La figure 6 illustre le produit ainsi obtenu. Cette photographie montre à nouveau que la cristallisation des plaquettes d'hydromagnésite a eu lieu à la surface des particules de CaCO₃ (PCC formé in situ et GCC).

### Exemple 5 : carbonatation à 60 °C d'une suspension de dolomie et de calcaire broyé avec Ca/Mg (mol) de l'ordre de 2,0.

Cet exemple est tout à fait comparable à l'exemple 4 ci-dessus, avec cette fois un rapport Ca/Mg de l'ordre de 2,0.

Dans une première étape 4,7 kg de la même dolomie vive que celle utilisée dans l'exemple 4 sont placés dans 19 kg d'eau chauffée à 55 °C. Cette suspension est à nouveau placée sous agitation pendant 30 minutes. A l'issue des 30 minutes d'hydratation, 20 kg supplémentaires d'eau et 4,7 kg de calcaire broyé (GCC identique à celui de l'exemple 4) sont ajoutés et l'agitation est prolongée pendant 20 minutes. Comme précédemment, la suspension ainsi obtenue est tamisée à 200 µm. Elle est ensuite diluée jusqu'à un extrait sec de 11,4 %. 80 dm³ de cette suspension sont alors introduits dans le réacteur de 100 dm³.

La carbonatation est à nouveau réalisée à 60 °C avec les mêmes débits de CO₂ et d'air. L'extrait sec de la suspension étant différent de celui de la suspension de l'exemple 4, ces débits correspondent cette fois à 4,9 dm³/min de CO₂ et 19,7 dm³/min d'air par kg de solide présent dans la suspension avant carbonatation.

Au cours de la carbonatation, l'évolution de la conductivité électrique de la suspension et de son pH est similaire à celle décrite dans l'exemple 5. La réaction est arrêtée lorsque la conductivité électrique est stabilisée pendant 20 minutes à 8,0 mS/cm (± 0,2 mS/cm)

A l'issue de la carbonatation, la distribution en taille des particules en suspension est à nouveau mesurée et conduit à une valeur de d₅₀ de 7,6 µm. La suspension est ensuite filtrée, séchée puis le solide obtenu est broyé comme dans les exemples ci-dessus.

D'après une analyse par diffraction des rayons X complétée par une analyse thermogravimétrique, le produit ainsi obtenu contient 71 ± 2 % de CaCO₃ (calcite), 26 ± 2 % d'hydromagnésite, le reste étant composé de Mg(OH)₂ et Mg₃O₂(OH)₂. Sa masse volumique en vrac mesurée d'après la norme EN 459.2 est de 247 kg/m³. Sa surface spécifique est de 12,6 m²/g (méthode BET basée sur une mesure de manométrie d'adsorption d'azote). Sa conductivité thermique est de 38,7 mW/K/m pour une masse volumique au moment de la mesure de 244 kg/m³._La figure 7 illustre le produit ainsi obtenu.

### Exemple comparatif

### 6 : carbonatation à 60 °C d'une suspension préparée en hydratant une chaux vive avec une suspension de Mg(OH)₂ (avec Ca/Mg (mol) de l'ordre de 1,2).

Cet exemple est similaire aux exemples 4 et 5 ci-dessus dans le sens où les conditions de carbonatation de la suspension sont identiques. En revanche, la suspension préparée avant carbonatation est différente.

En effet, dans cet exemple, la suspension à carbonater est obtenue en procédant, comme prévu selon un mode de réalisation de l'invention, à une hydratation préliminaire de chaux vive (CaO) dans une suspension de Mg(OH)₂. Aucun carbonate de calcium broyé (GCC) n'est utilisé pour la préparation de la suspension. La suspension de Mg(OH)₂ est la même que celle utilisée ci-dessus dans les exemples 1 à 3. Cette suspension de Mg(OH)₂ est diluée avec de l'eau de manière à avoir un extrait sec de 20,0 %. 4,8 kg de chaux vive (obtenue par calcination d'un calcaire) sont alors mélangés avec 20,0 kg de cette suspension diluée de Mg(OH)₂. Cela correspond à 4,8 kg de chaux vive CaO, 4,0 kg de Mg(OH)₂ et 16,0 kg d'eau, soit un rapport molaire Ca/Mg d'environ 1,2. Ce mélange est maintenu sous agitation pendant environ 30 minutes durant lesquelles la chaux vive est hydratée par l'eau apportée par la suspension de Mg(OH)₂. A la fin de cette étape, la phase solide en suspension est majoritairement composée de Ca(OH)₂ et Mg(OH)₂ avec des traces de CaCO₃ (incuits dans la chaux vive et/ou dans Mg(OH)₂), de CaO non hydraté et des impuretés. La suspension est ensuite tamisée à 200 µm puis diluée jusqu'à un extrait sec de 6,9 %. 80 dm³ de cette suspension diluée sont ensuite placés dans le réacteur de 100 dm³. La carbonatation est à nouveau réalisée à 60 °C avec 45 dm³/min de CO₂ et 180 dm³/min d'air, soit 8,2 dm³/min de CO₂ et 32,6 dm³/min d'air par kg de phase solide en suspension.

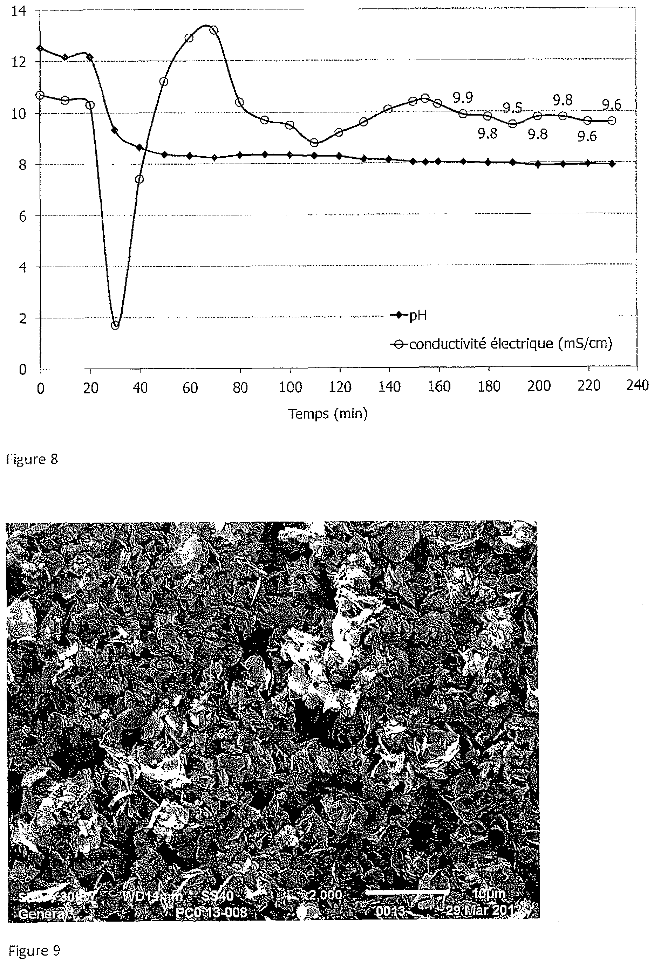

Comme dans les exemples 4 et 5, au cours de la carbonatation (Figure 8), la conductivité électrique de la suspension commence par diminuer fortement et cette diminution est accompagnée d'une chute de pH de 12,5 à 9,3. Ces résultats sont le signe de la carbonatation in situ de la partie calcique de la phase solide, c'est-à-dire de la chaux hydratée Ca(OH)₂ en CaCO₃ (PCC). Puis, la conductivité électrique remonte rapidement du fait de la dissolution de la partie magnésienne (Mg(OH)₂ en ions bicarbonate de Mg. Après un certain temps, la conductivité électrique diminue à nouveau, signe de précipitation d'hydromagnésite. Finalement, la conductivité électrique se stabilise et la réaction est arrêtée après 1 heure à 9,7 mS/cm (± 0,2 mS/cm). Cette deuxième phase de la réaction correspondant à la réaction de la partie magnésienne s'accompagne d'une deuxième diminution du pH jusqu'à 7,9.

A l'issue de la carbonatation, le d₅₀ de cette suspension carbonatée est de 8,1 µm. La suspension est ensuite filtrée, séchée et le solide obtenu est broyé comme dans les exemples précédents.

D'après une analyse par diffraction des rayons X complétée par une analyse thermogravimétrique, le produit ainsi obtenu contient 51 ± 2 % de CaCO₃ (calcite), 45 ± 2 % d'hydromagnésite, le reste étant composé de Mg(OH)₂ et de Mg₃O₂(OH)₂. Sa masse volumique en vrac mesurée d'après la norme EN 459.2 est de 152 kg/m³. Sa surface spécifique est de 17,0 m²/g. Sa conductivité thermique est de 36,4 mW/K/m pour une masse volumique au moment de la mesure de 154 kg/m³. La figure 9 est un cliché de microscopie électronique à balayage du produit ainsi obtenu. Cette photographie montre des plaquettes d'hydromagnésite bien cristallisées.

### Exemple 7 : carbonatation à 60 °C d'une chaux magnésienne avec Ca/Mg (mol) de l'ordre de 2,9.

Dans cet exemple, la matière première est un calcaire magnésien contenant 75,6 % de CaCO₃, 22,1 % de MgCO₃ et le reste d'impuretés (SiO₂ principalement, mais aussi Al₂O₃ et Fe₂O₃). Le rapport molaire entre Ca et Mg est donc dans ce cas de l'ordre de 2,9. Ce calcaire (de calibre 5-15 mm) a été calciné pendant 2 h à 980 °C dans un four électrique de laboratoire. A l'issue de la calcination, une chaux magnésienne partiellement calcinée est obtenue. En effet, pendant la calcination, si la décarbonatation de MgCO₃ en MgO a été totale, celle de CaCO₃ en CaO n'était qu'incomplète. Le produit calciné contient donc MgO, CaO, CaCO₃ et les impuretés, la teneur en CaCO₃ étant de l'ordre de 44 % d'après une analyse par thermogravimétrie de l'échantillon calciné (950 °C à 5 °C/min sous azote).

Environ 6,5 kg de ce produit calciné sont alors introduits dans 19,5 dm³ d'eau préalablement chauffée à 55 °C et la réaction d'hydratation est maintenue pendant environ 1 heure sous agitation (300 rpm). A la fin de cette réaction d'hydratation, la suspension contient Mg(OH)₂ et Ca(OH)₂ produits par l'hydratation de MgO et CaO, mais aussi de l'oxyde de magnésium MgO non hydraté, le CaCO₃ issu de la calcination incomplète du calcaire magnésien de départ ainsi que les impuretés contenues dans ce calcaire magnésien à l'origine. La suspension ainsi obtenue est ensuite tamisée à 200 µm puis diluée de manière à obtenir un extrait sec (teneur en solide) de 7,6 % en poids. 80 dm³ de cette suspension sont alors introduits dans le réacteur d'une capacité de 100 dm³.

La carbonatation se fait une fois de plus à 60 °C avec 45 dm³/min de CO₂ et 180 dm³/min d'air, soit 7,4 dm³/min de CO₂ et 29,6 dm³/min d'air par kg de phase solide en suspension.

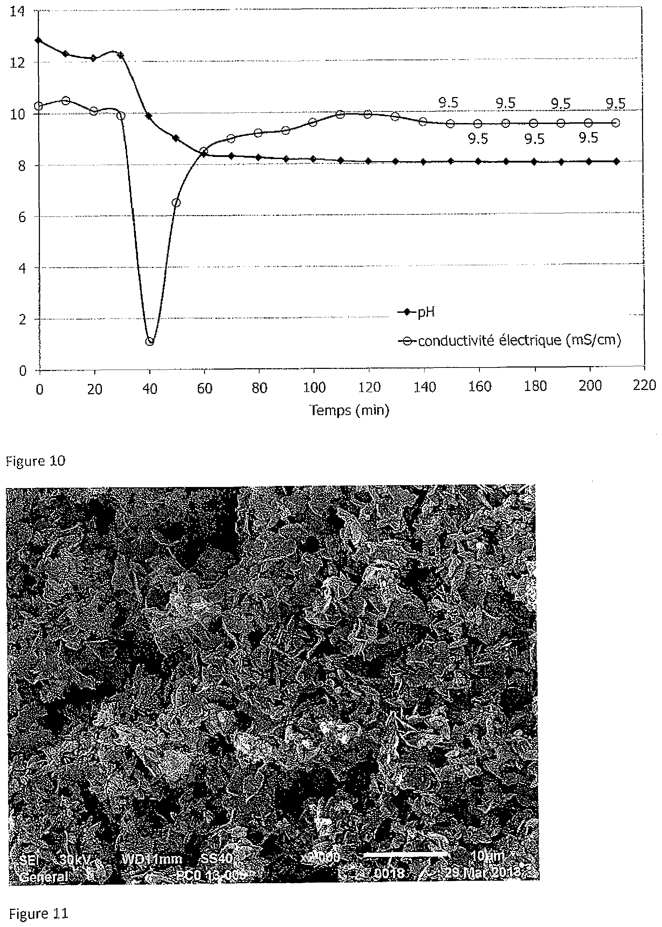

L'évolution de la conductivité électrique de la suspension et de son pH commence de la même manière que dans l'exemple 6, c'est-à-dire avec une diminution simultanée nette de la conductivité électrique et du pH correspondant à la précipitation de carbonate de calcium (PCC) à partir de la chaux hydratée présente en suspension (Figure 10). A la fin de cette première étape, le pH de la suspension est d'environ 9,5.

Puis, toujours de la même manière que dans l'exemple 6, la conductivité remonte rapidement du fait de la production d'ions bicarbonate de Mg. Si dans l'exemple 6 (Figure 8), la conductivité diminuait une nouvelle fois avant de se stabiliser, ici (Figure 10), aucune diminution n'est observée et la conductivité se stabilise progressivement après la remontée liée aux ions bicarbonate. Cette différence entre cet exemple 7 et l'exemple 6 est probablement liée à la réactivité des sources de Mg.

A l'issue de la carbonatation, le d₅₀ de cette suspension est de 7,0 µm. La suspension est ensuite filtrée, séchée et le solide obtenu est broyé comme dans les exemples précédents.

D'après une analyse par diffraction des rayons X complétée par une analyse thermogravimétrique, le produit ainsi obtenu contient 68 ± 2 % de CaCO₃(calcite), 28 ± 2 % d'hydromagnésite, le reste étant composé de Mg(OH)2 et de Mg₃O₂(OH)₂. Sa masse volumique en vrac mesurée d'après la norme EN 459.2 est de 221 kg/m³. Sa surface spécifique est de 17,4 m²/g. Sa conductivité thermique est de 37,4 mW/K/m pour une masse volumique au moment de la mesure de 213 kg/m³. La figure 11 est un cliché de microscopie électronique à balayage du produit ainsi obtenu. Cette photographie montre des plaquettes d'hydromagnésites bien cristallisées.

Il doit être entendu que l'invention n'est en aucune façon limitée à ces exemples et que bien des modifications peuvent y être apportées dans le cadre des revendications annexées.

## Revendications

1. Procédé de préparation d'une composition minérale à base d'une phase solide mixte de carbonates de calcium et de magnésium, **caractérisé en ce qu'**il comprend
- i) une préparation, dans une phase aqueuse, d'une suspension d'une phase solide contenant au moins un composé calcique choisi parmi de l'hydroxyde de calcium, du carbonate de calcium et leurs mélanges et au moins un composé magnésien choisi parmi de l'oxyde de magnésium, de l'hydroxyde de magnésium, de la dolomie au moins partiellement hydratée, et leurs mélanges, le poids de ladite phase solide étant compris entre 5 et 15 % du poids total de la suspension, à l'exclusion d'une mise en suspension uniquement de dolomie, hydratée ou non,
- ii) une carbonatation, en une seule étape, de ladite phase solide en suspension par injection d'un gaz contenant du CO₂ dans ladite suspension chauffée à une température de 55 à 90°C à un débit de CO₂ de 2,5 à 15 dm³/min/kg de ladite phase solide de la suspension, avec une diminution du pH de la suspension jusqu'à une valeur inférieure à 9 et avec une stabilisation de la conductivité électrique de la suspension, la carbonatation étant stoppée dès que cette stabilisation de conductivité électrique est observée et,
- iii) une obtention d'une phase solide mixte de carbonates de calcium et de magnésium de synthèse formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous la forme d'agglomérats, ladite partie calcique comprenant au moins un carbonate choisi parmi le groupe constitué de calcite et de mélanges de calcite et d'aragonite, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2, et un rapport molaire Ca/Mg supérieur à 1,2 et égal ou inférieur à 4,0.

2. Procédé suivant la revendications 1 , **caractérisé en ce que** ledit au moins composé magnésien est choisi parmi de l'oxyde de magnésium, de l'hydroxyde de magnésium et leurs mélanges.

3. Procédé suivant l'une des revendications 1 et 2, **caractérisé en ce que** ledit au moins un composé magnésien est de la dolomie au moins partiellement hydratée, éventuellement en mélange avec de l'oxyde de magnésium, de l'hydroxyde de magnésium ou leur mélange, de façon à obtenir un rapport molaire Ca/Mg supérieur à 1,2 et inférieur ou égal à 4,0, en particulier inférieur ou égal à 3,0, dans ladite phase solide de la suspension.

4. Procédé suivant l'une des revendications 1 à 3, **caractérisé en ce qu'**il comprend, lors de ladite préparation d'une suspension, une hydratation par ladite phase aqueuse d'oxyde de calcium (CaO) en ledit hydroxyde de calcium.

5. Procédé suivant l'une des revendications 1 à 3, **caractérisé en ce qu'**il comprend, avant ladite préparation d'une suspension, une hydratation préliminaire au moins partielle d'oxyde de calcium (CaO) en ledit hydroxyde de calcium .

6. Procédé suivant la revendication 5, **caractérisé en ce que** ladite hydratation préliminaire est réalisée avec de l'eau, de l'eau contenant au moins un additif ou de l'eau contenant déjà au moins une partie dudit au moins un composé magnésien faisant partie de ladite phase solide en suspension.

7. Procédé suivant l'une des revendications 1 à 6, **caractérisé en ce qu'**il comprend, lors de ladite préparation d'une suspension, une hydratation au moins partielle par ladite phase aqueuse d'oxyde de magnésium (MgO) en ledit hydroxyde de magnésium.

8. Procédé suivant l'une des revendications 1 à 6, **caractérisé en ce qu'**il comprend, avant ladite préparation d'une suspension, une hydratation préalable au moins partielle d'oxyde magnésium (MgO) en ledit hydroxyde de magnésium.

9. Procédé suivant la revendication 8, **caractérisé en ce que** ladite hydratation préalable est réalisée avec de l'eau, de l'eau contenant au moins un additif ou de l'eau contenant déjà au moins une partie dudit au moins un composé calcique faisant partie de ladite phase solide en suspension.

10. Procédé selon l'une des revendications 1 à 9, comprenant en outre, après carbonatation, une étape de séparation solide-liquide entre ladite phase solide mixte, carbonatée, et ladite phase aqueuse de ladite suspension.

11. Procédé selon la revendication 10, dans lequel ladite phase solide mixte est ensuite au moins partiellement séchée.

12. Procédé selon l'une quelconque des revendications 1 à 11, dans lequel ladite phase solide mixte est broyée pour obtenir des particules de taille inférieure ou égale à 2 mm.

13. Composition minérale à base d'une phase solide mixte de carbonates de calcium et de magnésium de synthèse, formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous forme d'agglomérats, ladite partie calcique comprenant au moins un carbonate choisi parmi le groupe constitué de calcite et de mélanges de calcite et d'aragonite, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2, et la dite phase solide mixte présentant un rapport molaire Ca/Mg supérieur à 1,2 et inférieur ou égal à 4,0.

14. Composition minérale selon la revendication 13, comprenant en outre une phase aqueuse, ladite composition minérale étant sous forme de suspension ou de pâte.

15. Composition minérale selon la revendication 13, dans laquelle ladite composition minérale est sous forme solide, en particulier pulvérulente, et présente un taux d'humidité compris entre 0 et 4 % en poids d'eau par rapport au poids total de la composition.

16. Composition minérale suivant l'une quelconque des revendications 13 à 15, **caractérisée en ce que** les agrégats de la phase solide mixte sont constitués d'un coeur calcique sur lequel sont agrégées des plaquettes d'hydromagnésite.

17. Utilisation d'une composition selon l'une quelconque des revendications 13 à 16, ou d'une composition obtenue selon le procédé suivant l'une quelconque des revendications 1 à 12, dans des matériaux de construction.

18. Utilisation d'une composition selon l'une quelconque des revendications 13 à 16, ou d'une composition obtenue selon le procédé suivant l'une quelconque des revendications 1 à 12, comme constituant de matériaux d'isolation thermique, en particulier dans des panneaux d'isolation thermique.

## Patentansprüche

1. Verfahren zur Herstellung einer Mineralverbindung auf Basis einer gemischten festen Phase von Calcium- und Magnesiumcarbonaten, **dadurch gekennzeichnet, dass** es Folgendes umfasst:
- i) Herstellen, in einer wässrigen Phase, einer Suspension einer festen Phase, welche zumindest eine Calciumverbindung enthält, ausgewählt aus Calciumhydroxid, Calciumcarbonat und deren Mischungen, und zumindest eine Magnesiumverbindung ausgewählt aus Magnesiumoxid, Magnesiumhydroxid, zumindest teilweise gelöschtem Dolomit und deren Mischungen, wobei das Gewicht der erwähnten festen Phase zwischen 5 und 15 % des Gesamtgewichts der Suspension beträgt, ausgenommen eine Suspendierung von ausschließlich Dolomit, gelöscht oder nicht,
- ii) Karbonisieren in einem einzigen Schritt der festen Phase in Suspension durch Einspritzen eines Gases, das CO₂ enthält, in die auf eine Temperatur von 55 bis 90°C erwärmte Suspension, in einem Durchsatz von CO₂ von 2,5 bis 15 dm³/min/kg der festen Phase der Suspension, mit einer Senkung des pH-Wertes der Suspension auf einen Wert unter 9 und mit einer Stabilisierung der elektrischen Leitfähigkeit der Suspension, wobei die Karbonisierung beendet wird, sobald diese Stabilisierung der elektrischen Leitfähigkeit beobachtet wird, und
- iii) Erhalten einer gemischten festen Phase von synthetischen Calcium- und Magnesiumcarbonaten, bestehend aus einem kristallisierten Calciumanteil und einem kristallisierten Magnesiumanteil in Form von Plättchen, wobei die Kristalle des Calciumanteils und jene des Magnesiumanteils in Form von Kompositaggregaten aggregiert sind, wobei diese Aggregate selbst zumindest teilweise in Form von Agglomeraten agglomeriert sind, wobei der Calciumanteil zumindest ein Carbonat enthält, ausgewählt aus der Gruppe bestehend aus Calcit und Mischungen von Calcit und Aragonit, wobei der Magnesiumanteil Hydromagnesit in Plättchenform umfasst, wobei die gemischte feste Phase von Carbonaten der Mineralverbindung lose eine Massendichte von weniger als oder gleich 250 kg/m³ und von mehr als oder gleich 80 kg/m³, gemessen nach der Norm EN 459.2, und ein Stoffmengenverhältnis Ca/Mg von mehr als 1,2 und gleich oder weniger als 4,0 aufweist.

2. Verfahren nach Anspruch 1, **dadurch gekennzeichnet, dass** die zumindest eine Magnesiumverbindung aus Magnesiumoxid, Magnesiumhydroxid und deren Mischungen ausgewählt wird.

3. Verfahren nach einem der Ansprüche 1 und 2, **dadurch gekennzeichnet, dass** die zumindest eine Magnesiumverbindung zumindest teilweise gelöschter Dolomit ist, eventuell in Mischung mit Magnesiumoxid, Magnesiumhydroxid oder deren Mischung, sodass in der festen Phase der Suspension ein Stoffmengenverhältnis Ca/Mg von mehr als 1,2 und weniger als oder gleich 4,0, insbesondere weniger als oder gleich 3,0, erreicht wird.

4. Verfahren nach irgendeinem der Ansprüche 1 bis 3, **dadurch gekennzeichnet, dass** es bei der Herstellung einer Suspension ein Löschen durch die wässrige Phase von Calciumoxid (CaO) und das Calciumhydroxid umfasst.

5. Verfahren nach irgendeinem der Ansprüche 1 bis 3, **dadurch gekennzeichnet, dass** es vor der Herstellung einer Suspension ein zumindest teilweises vorbereitendes Löschen von Calciumoxid (CaO) und dem Calciumhydroxid umfasst.

6. Verfahren nach Anspruch 5, **dadurch gekennzeichnet, dass** das vorbereitende Löschen mit Wasser durchgeführt wird, Wasser, das zumindest einen Zusatz enthält, oder Wasser, das bereits zumindest einen Teil der zumindest einen Magnesiumverbindung enthält, die Teil der festen Phase in Suspension ist.

7. Verfahren nach irgendeinem der Ansprüche 1 bis 6, **dadurch gekennzeichnet, dass** es bei der Herstellung einer Suspension ein zumindest teilweises Löschen durch die wässrige Phase von Magnesiumoxid (MgO) und das erwähnte Magnesiumhydroxid umfasst.

8. Verfahren nach irgendeinem der Ansprüche 1 bis 6, **dadurch gekennzeichnet, dass** es vor der Herstellung einer Suspension ein zumindest teilweises vorheriges Löschen von Magnesiumhydroxid (MgO) und dem erwähnten Magnesiumhydroxid umfasst.

9. Verfahren nach Anspruch 8, **dadurch gekennzeichnet, dass** das vorherige Löschen mit Wasser durchgeführt wird, Wasser, das zumindest einen Zusatz enthält, oder Wasser, das bereits zumindest einen Teil der zumindest einen Calciumverbindung enthält, die Teil der festen Phase in Suspension ist.

10. Verfahren nach irgendeinem der Ansprüche 1 bis 9, welches ferner nach der Karbonisierung einen Schritt zur Trennung fest-flüssig zwischen der gemischten, karbonisierten festen Phase, und der wässrigen Phase der erwähnten Suspension umfasst.

11. Verfahren nach Anspruch 10, wobei die gemischte feste Phase danach zumindest teilweise getrocknet wird.

12. Verfahren nach irgendeinem der Ansprüche 1 bis 11, wobei die gemischte feste Phase zerkleinert wird, um Partikel in einer Größe von weniger als oder gleich 2 mm zu erhalten.

13. Mineralverbindung auf Basis einer gemischten festen Phase von synthetischen Calcium- und Magnesiumcarbonaten, bestehend aus einem kristallisierten Calciumanteil und einem kristallisierten Magnesiumanteil in Form von Plättchen, wobei die Kristalle des Calciumanteils und jene des Magnesiumanteils in Form von Kompositaggregaten aggregiert sind, wobei diese Aggregate selbst zumindest teilweise in Form von Agglomeraten agglomeriert sind, wobei der Calciumanteil zumindest ein Carbonat enthält, ausgewählt aus der Gruppe bestehend aus Calcit und Mischungen von Calcit und Aragonit, wobei der Magnesiumanteil Hydromagnesit in Plättchenform umfasst, wobei die gemischte feste Phase von Carbonaten der erwähnten Mineralverbindung lose eine Massendichte von weniger als oder gleich 250 kg/m³ und von mehr als oder gleich 80 kg/m³, gemessen nach der Norm EN 459.2, aufweist und die gemischte feste Phase ein Stoffmengenverhältnis Ca/Mg von mehr als 1,2 und weniger als oder gleich 4,0 aufweist.

14. Mineralverbindung nach Anspruch 13, welche ferner eine wässrige Phase umfasst, wobei die Mineralverbindung in Form von Suspension oder Paste vorliegt.

15. Mineralverbindung nach Anspruch 13, wobei die Mineralverbindung in fester Form, insbesondere pulverförmig, vorliegt und einen Feuchtigkeitsanteil von zwischen 0 und 4 Gew.-% Wasser im Verhältnis zum Gesamtgewicht der Zusammensetzung aufweist.

16. Mineralverbindung nach irgendeinem der Ansprüche 13 bis 15, **dadurch gekennzeichnet, dass** die Aggregate der gemischten festen Phase aus einem Calciumkern bestehen, auf dem die Hydromagnesitplättchen aggregiert sind.

17. Verwendung einer Zusammensetzung nach irgendeinem der Ansprüche 13 bis 16 oder einer Zusammensetzung erhalten nach dem Verfahren nach irgendeinem der Ansprüche 1 bis 12, in Baumaterialien.

18. Verwendung einer Zusammensetzung nach irgendeinem der Ansprüche 13 bis 16 oder einer Zusammensetzung erhalten nach dem Verfahren nach irgendeinem der Ansprüche 1 bis 12, als Bestandteil von Wärmedämmmaterialien, insbesondere in Wärmedämmplatten.

## Claims

1. A process for preparing a mineral composition based on a mixed solid phase of calcium and magnesium carbonates, **characterised in that** it comprises
- i) preparing, in an aqueous phase, a suspension of a solid phase containing at least one calcium compound selected from calcium hydroxide, calcium carbonate and mixtures thereof and at least one magnesium compound selected from magnesium oxide, magnesium hydroxide, dolomite at least partially hydrated, and mixtures thereof, the weight of said solid phase being between 5 and 15% of the total weight of the suspension, excluding suspension of only dolomite, hydrated or not,
- ii) carbonating, in a single step, said solid phase in suspension by injection of a gas containing CO₂ into said suspension heated at a temperature of 55 to 90°C at a CO₂ flow rate of 2.5 to 15 dm³/min/kg of said solid phase of the suspension, with a decrease in the pH of the suspension to a value of less than 9 and with a stabilization of the electrical conductivity of the suspension, the carbonating being stopped as soon as this stabilization of electrical conductivity is observed and,
- iii) obtaining a mixed solid phase of synthetic calcium and magnesium carbonates formed of a crystallized calcic portion and a plate-like crystallized magnesium portion, the crystals of the calcic portion and those of the magnesium portion being aggregated in the form of composite aggregates, these aggregates being themselves at least partially agglomerated in the form of agglomerates, said calcic portion comprising at least one carbonate selected from the group consisting of calcite and mixtures of calcite and aragonite, said magnesium portion comprising the hydromagnesite in plate-like form, said mixed solid phase of carbonates of said mineral composition having a bulk density of less than or equal to 250 kg/m³, and greater than or equal to 80kg/m³; measured in accordance with standard EN 459.2, and a Ca/Mg molar ratio greater than 1.2 and equal to or less than 4.0.

2. The process according to claim 1, **characterized in that** said at least one magnesium compound is selected from magnesium oxide, magnesium hydroxide and mixtures thereof.

3. The process according to one of claims 1 and 2, **characterized in that** said at least one magnesium compound is dolomite at least partially hydrated, possibly mixed with magnesium oxide, magnesium hydroxide or mixture thereof, so as to obtain a Ca/Mg mole ratio greater than 1.2 and less than or equal to 4.0, in particular less than or equal to 3.0, in said solid phase of the suspension.

4. The process according to one of claims 1 to 3, **characterized in that** it comprises, during said preparation of a suspension, a hydration by said aqueous phase of calcium oxide (CaO) in said calcium hydroxide.

5. The process according to one of claims 1 to 3, **characterized in that** it comprises, prior to said preparation of a suspension, a preliminary at least partial hydration of calcium oxide (CaO) in said calcium hydroxide.

6. The process according to claim 5, **characterized in that** said preliminary hydration is carried out with water, water containing at least one additive or water already containing at least a portion of said at least one magnesium compound that is part of said solid phase in suspension.

7. The process according to one of claims 1 to 6, **characterized in that** it comprises, during said preparation of a suspension, a hydration at least partial by said aqueous phase of magnesium oxide (MgO) in said magnesium hydroxide.

8. The process according to one of claims 1 to 6, **characterized in that** it comprises, prior to said preparation of a suspension, a prior hydration at least partial of magnesium oxide (MgO) in said magnesium hydroxide.

9. The process according to claim 8, **characterized in that** said prior hydration is carried out with water, water containing at least one additive or water already containing at least a portion of said at least one calcium compound that is part of said solid phase in suspension.

10. The process according to one of claims 1 to 9, further comprising, after carbonation, a solid-liquid separation step between said carbonated solid mixed phase, and said aqueous phase of said suspension.

11. The process of claim 10, wherein said mixed solid phase is then at least partially dried.

12. The process of any one of claims 1 to 11, wherein said mixed solid phase is milled to obtain particles of size smaller than or equal to 2 mm.

13. A mineral composition based on a mixed solid phase of synthetic calcium and magnesium carbonates, formed of a crystallized calcium portion and a plate-like crystallized magnesium portion, the crystals of the calcium portion and those of the magnesium portion being aggregated in the form of composite aggregates, these aggregates being themselves at least partially agglomerated in the form of agglomerates, said calcic portion comprising at least one carbonate selected from the group consisting of calcite and mixtures of calcite and aragonite, said magnesium portion comprising hydromagnesite in plate-like form, said mixed solid phase of carbonates of said mineral composition having a bulk density of less than or equal to 250 kg/m³, and greater than or equal to 80 kg/m³, measured in accordance with standard EN 459.2, and said mixed solid phase having a Ca/Mg mole ratio greater than 1.2 and less than or equal to 4.0.

14. The mineral composition according to claim 13, further comprising an aqueous phase, said mineral composition being in the form of suspension or paste.

15. The mineral composition according to claim 13, wherein said mineral composition is in solid form, in particular powder form, and has a moisture level of between 0 and 4% by weight of water relative to the total weight of the composition.

16. The mineral composition according to any one of claims 13 to 15, **characterized in that** the aggregates of the mixed solid phase consist of a calcic core on which hydromagnesite plates are aggregated.

17. Use of a composition according to any one of claims 13 to 16, or a composition obtained according to the process according to any one of claims 1 to 12, in building materials.

18. Use of a composition according to any one of claims 13 to 16, or a composition obtained according to the process according to any one of claims 1 to 12, as a constituent of thermal insulation materials, in particular in thermal insulation panels.
